# EUROPÄISCHE PATENTSCHRIFT

(11) **EP 4 232 502 B1**
(45) Veröffentlichungstag und Bekanntmachung des Hinweises auf die Patenterteilung: **27.03.2024**
(21) Anmeldenummer: 20793682.4
(22) Anmeldetag: 20.10.2020
(51) Int. Cl.: C08G 77/02, C08G 77/60

(54) **POLYMERE ALKYLSILIKATE**
POLYMERIC ALKYL SILICATES
SILICATES D'ALKYLE POLYMÉRIQUES

(43) Veröffentlichungstag der Anmeldung: 30.08.2023
(73) Patentinhaber: Wacker Chemie AG, 81737 München (DE)
(72) Erfinder: FRITZ-LANGHALS, Elke, 85521 Ottobrunn (DE)
(86) Internationale Anmeldenummer: PCT/EP2020/079521
(87) Internationale Veröffentlichungsnummer: WO 2022/083852

(56) Entgegenhaltungen:
- JP-A- H07 152 156
- US-A- 2 566 364
- US-A- 2 566 956

## Beschreibung

Die Erfindung betrifft neuartige polymere Alkylsilikate. Silicone sind eine technisch sehr wichtige Stoffklasse, die in zahlreichen Technologiefeldern eingesetzt wird. Technisch wichtige Eigenschaften der Silicone sind beispielsweise ihre geringe Tendenz zur Kristallisation, welche Silicone gegenüber Kohlenstoff-basierten Polymeren auszeichnet. Silicone bleiben über weite Temperaturbereiche flüssig, sie weisen sehr niedrige Glastemperaturen auf.

Silicone werden aufgrund der enthaltenen Si-gebundenen Alkylgruppierungen in der Umwelt jedoch nur sehr schwer abgebaut. Diese Eigenschaft schränkt die Anwendungsmöglichkeiten für Silicone in zunehmendem Maße ein. Deshalb besteht ein stetig wachsender Bedarf an alternativen, prinzipiell hydrolytisch spaltbaren aber dennoch für praktische Anwendungen hinreichend hydrolyse-stabilen Materialien, welche die herkömmlichen Silicone ersetzen können.

In US 3992429 und US 4132664 werden silikatische Verbindungen der Formel [(R^{a}O)₃SiO]₃Si-O-KW-O-Si[OSi(OR^{a})₃]₃, wobei KW einen Kohlenwasserstoffrest bedeutet, beschrieben. Diese Systeme sind jedoch niedermolekular.

Das Dokument US 2 566 364 A offenbart in seinem Beispiel 1 die basische, durch Ammoniak katalysierte Polymerisation von Di-t-butoxydichlorsilan. Diese Verbindung wird durch die Umsetzung von Tetrachlorsilan und T-butylalkohol hergestellt. Die Dokumente US 2 566 956 A und JP H07 152156 A haben ähnliche Offenbarungen.

In vielen technischen Anwendungen sind jedoch niedermolekulare Verbindungen aufgrund ihrer Flüchtigkeit und ihres Migrationsverhaltens unerwünscht.

Aufgabe der Erfindung ist es daher, die oben genannten Nachteile zu überwinden und polymere Alkylsilikate bereitzustellen, die ähnliche Eigenschaften aufweisen wie Silicone und daher Silicone ersetzen können.

Die Aufgabe wird durch die Erfindung gelöst. Gegenstand der Erfindung sind polymere Alkylsilikate der Formel (I) 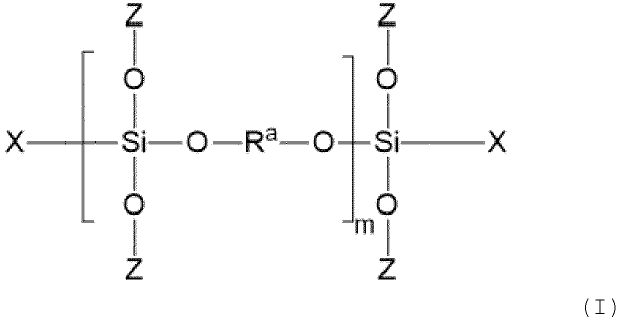 wobei
- Z: einen Rest der Formel -Si(OR^{b})₃ oder einen Rest der Formel -CR^{c}₃ bedeutet,
- R^{a}: wie in Anspruch 1 definiert ist,
- R^{b}: unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
- R^{c}: unabhängig voneinander einen einwertigen unsubstituierten oder substituierten Kohlenwasserstoffrest mit 1 bis 50 C-Atomen, vorzugsweise 1 bis 10 C-Atomen, bevorzugt 1 bis 5 C-Atomen, bedeutet,
- X: ein Halogenatom, einen über Sauerstoffgebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiR^{x}₃ bedeutet,
- R^{x}: unabhängig voneinander einen einwertigen unsubstituierten oder substituierten C₁- bis C₄₀-Kohlenwasserstoffrest bedeutet und
- m: eine ganze Zahl von mindestens 2, vorzugsweise mindestens 5 und höchstens 1000, vorzugsweise höchstens 500, bevorzugt höchstens 100, bedeutet.

Der Begriff "verzweigt" bedeutet, dass sich an einem Kohlenstoffatom zwei Kohlenstoffreste befinden.

Der Begriff "zweifach verzweigt" bedeutet, dass sich an einem Kohlenstoffatom drei Kohlenstoffreste befinden.

Die Reste R^{a}, R^{b}, R^{c} und R^{x} sowie der Rest X, wenn X ungleich Halogenatom, können acyclisch, cyclisch, gesättigt oder ein- oder mehrfach ungesättigt oder aromatisch sein, sie können außerdem folgende Substitutionen aufweisen:
-OR¹, -NR¹₂, -SH, -SR¹, Epoxygruppe, -COOR¹, -CHO, -CN, -OCOOR², -NR¹-COOR¹, -NR¹-CO-NR¹, -SiR¹₃ und -OSiR₃¹, wobei
R¹ ein Wasserstoffatom oder einen einwertigen C₁- bis C₁₈-Kohlenwasserstoffrest bedeutet und
R² einen einwertigen C₁- bis C₁₈-Kohlenwasserstoffrest bedeutet.

R^{a} bedeutet unabhängig voneinander einen zweiwertigen Kohlenwasserstoffrest mit 1 bis 200 Kohlenstoffatomen, bevorzugt mit 3 bis 50 Kohlenstoffatomen, wobei die Kohlenstoffatome durch Sauerstoffatome oder durch Siloxanylreste der Formel -(R^{y}₂SiO)ₒ-SiR^{y}₂- ersetzt sein können, wobei
R^{y} unabhängig voneinander einen C₁- bis C₂₀-Kohlenwasserstoffrest, bevorzugt einen C₁- bis C₆-Kohlenwasserstoffrest, bedeutet und
o eine ganze Zahl von 0 bis 100, bevorzugt eine ganze Zahl von 0 bis 20, ist.

Beispiele für Reste R^{a} sind der 1,3-Propylen-, 1,4-Butylen-, 1,2-Cyclohexyliden-, 1,3-Cyclohexyliden-, 1,4-Cyclohexyliden-, 1,2-Phenylen-, 1,3-Phenylen- und 1,4-Phenylen-rest.

Weitere Beispiele für Reste R^{a} sind der Rest der Formel

-CHR³-CHR³-(OCHR³-CHR³)ₚ-,

wobei
R³ ein Wasserstoffatom oder einen C₁- bis C₁₈-Kohlenwasserstoffrest, bevorzugt ein Wasserstoffatom oder einen Methylrest, bedeutet, und
p eine ganze Zahl von 0 bis 100, bevorzugt 0 bis 20, ist,
und Reste der Formeln

   - (Me₂SiO)ₒ-Me₂Si-

   -CH₂-CH₂-CH₂- (Me₂SiO)ₒ-Me₂Si-CH₂-CH₂-CH₂- und

   -CH₂-(Me₂SiO)ₒ-Me₂Si-CH₂-,

   wobei Me ein Methylrest ist und
   o die oben dafür angegebene Bedeutung hat.

Beispiele für Reste **R^{b}** sind der 2-Butylrest, der 3-Methyl-2-butylrest, der 3-Methyl-2-pentylrest, der 3-Pentylrest, der 2-Hexylrest, der 3-Hexylrest, der 2-Heptylrest, der 2-Octylrest, der 1-Phenylethylrest, der 1-Phenyl-1-propylrest, der 2,2-Dimethyl-1-propylrest, der 1,1-Dimethylethylrest und der 1,1-Dimethylpropylrest.

R^{c} bedeutet unabhängig voneinander vorzugsweise einen linearen oder verzweigten acyclischen Kohlenwasserstoffrest mit 1 bis 50 Kohlenstoffatomen, bevorzugt einen linearen oder verzweigten acyclischen Kohlenwasserstoffrest mit 1 bis 10 Kohlenstoffatomen, besonders bevorzugt einen linearen oder verzweigten acyclischen Kohlenwasserstoffrest mit 1 bis 5 Kohlenstoffatomen.

Beispiele für Reste R^{c} sind der Methyl-, Ethyl-, n-Propyl-, n-Butyl-, n-Pentyl-, Vinyl- und Allylrest.

X bedeutet bevorzugt ein Chloratom, einen über Sauerstoffgebundenen unsubstituierten oder substituierten C₁- bis C₄₀-Kohlenwasserstoffrest, bei dem einzelne Kohlenstoffatome durch Sauerstoff ersetzt sein können, oder Reste der Formeln -O-Si(OR^{b})₃ oder -OSiR^{x}₃, worin R^{x} unabhängig voneinander vorzugsweise einen C₁- bis C₁₀-Kohlenwasserstoffrest bedeutet.

Beispiele für Reste X sind das Chloratom, der 4-Hydroxycyclohexyloxyrest, sowie Reste der Formeln -O-(CH₂-CH₂)ᵣ-OH und -O-(CH₂-CH₂)ᵣ-OCH₃ mit r = 1-20, -O-Si(CH₃)₃, -O-Si(2-BuO)₃, -O-SiH(CH₃)₂, -O-Si (CH₃)₂-CH₂-CH₂-CH₂-NH₂, -O-Si (CH₃)₂-CH₂-CH₂-CH₂-NH-CH₂-CH₂-NH₂, -O-Si (CH₃)₂-CH=CH₂ und -O-Si (CH₃)₂-CH₂-CH₂-CH₂-O-CH₂-Epoxy

Bevorzugte Beispiele für Reste Z sind Reste der Formeln (2-BuO)₃SiO- und CH₃-CH₂-C(CH₃)₂O-, wobei 2-Bu ein 2-Butylrest ist.

Weitere Beispiele für Reste Z sind Reste der Formeln [CH₃-CH(CH₃)-CH(CH₃)O]₃SiO-, [CH₃-C(CH₃)₂-CH₂O]₃SiO-, [(CH₃-CH₂)₂-CHO]₃SiO-, [CH₃-(CH₂)₃-CH(CH₃)O]₃SiO-, [CH₃-(CH₂)₂-CH(C₂H₅)O]₃SiO-, (CH₃)₃CO-, (C₂H₅)₃CO-, (n-C₃H₇)₃CO-, (n-C₄H₉)₃CO-, (n-C₅H₁₁)₃CO- und CH₃-CH₂-C(CH₃)₂O-.

Die Verbindungen der allgemeinen Formel (I) können auf einfache Weise beispielsweise durch Umsetzung von [(R^{b}O)₃SiO]₂SiCl₂ oder (R^{c}₃CO)₂SiCl₂ mit einer Dihydroxyverbindung HO-R^{a}-OH hergestellt werden, wobei R^{a}, R^{b} und R^{c} die oben dafür angegebene Bedeutung haben. Wenn ein Überschuss an [(R^{a}O) ₃SiO]₂SiCl₂ oder (R^{c}₃CO)₂SiCl₂ vorliegt, werden bevorzugt Silikate der Formel I mit X = Cl gebildet, und wenn ein Überschuss an Dihydroxyverbindung vorliegt, werden bevorzugt Silikate der Formel I mit X = O-R^{a}-OH gebildet.

Eine weitere Möglichkeit besteht darin, die nach der Umsetzung vorliegenden Si-Cl Endgruppen mit einem Alkohol oder Silanol umzusetzen.

Gegenstand der Erfindung ist daher ein Verfahren zur Herstellung der erfindungsgemäßen polymeren Alkylsilikate, dadurch gekennzeichnet, dass Chlorsilane (1) der Formeln

[(R^{b}O)₃SiO]₂SiCl₂

oder

(R^{c}₃CO)₂SiCl₂

mit Dihydroxyverbindungen (2) der Formel

   HO-R^{a}-OH
oder deren Salze
umgesetzt werden,
wobei Dihydroxyverbindungen (2) in Mengen von 0,1 bis 10 Mol, vorzugsweise 0,5 bis 1,5 Mol Dihydroxyverbindung (2) je Mol Chlorsilan (1) eingesetzt werden,
und R^{a}, R^{b} und R^{c} die oben dafür angegebene Bedeutung haben.

Beispiele für Chlorsilane (1) sind
[(2-BuO)₃SiO]₂SiCl₂,
{[CH₃-CH(CH₃)-CH(CH₃)O]₃SiO}₂SiCl₂,
{[CH₃-CH₂-CH(CH₃)-CH(CH₃)O}₃SiO]₂SiCl₂,
{[(CH₃-CH₂)₂CHO]₃SiO}₂SiCl₂,
{[CH₃-(CH₂)₃-CH(CH₃)O]₃SiO]₂SiCl₂,
{[CH₃-(CH₂)₂-CH(C₂H₅)O]₃SiO]₂SiCl₂,
{[PhCH (CH₃)O]₃SiO]₂SiCl₂,
{[PhCH (C₃H₇)O]₃SiO]₂SiCl₂
{[CH₃-CH(CH₃)₂-CH₂O]₃SiO}₂SiCl₂,
{[CH₃-CH(CH₃)₂O]₃SiO}₂SiCl₂,
{[CH₃-CH₂-CH(CH₃)₂O]₃SiO}₂SiCl₂,
[(CH₃)₃CO]₂SiCl₂,
[(C₂H₅)₃CO]₂SiCl₂,
[(n-C₃H₇)₃CO]₂SiCl₂,
[(n-C₄H₉)₃CO]₂SiCl₂,
[(n-C₅H₁₁)₃CO]₂SiCl₂ und
[CH₃-CH₂-C(CH₃)₂O]₂SiCl₂,
wobei 2-Bu ein 2-Butylrest und Ph ein Phenylrest ist.

Bevorzugte Beispiele für Chlorsilane (1) sind solche der Formeln

[(2-BuO)₃SiO]₂SiCl₂

und

[CH₃-CH₂-C(CH₃)₂O]₂SiCl₂ ,

wobei 2-Bu ein 2-Butylrest ist.

Beispiele für Dihydroxyverbindungen (2) sind Ethylenglycol, Propylenglycol, 1,3-Propandiol, 1,4-Butandiol, 2,4-Pentandiol, 1,2-Cyclohexandiol, 1,3-Cyclohexandiol, 1,4-Cyclohexandiol, 1,2-Dihydroxybenzol, 1,3-Dihydroxybenzol, 1,4-Dihydroxybenzol, Polyethylenglycol, Polypropylenglycol, HO-SiMe₂-(O-SiMe₂)ₓ-OH und HO-CH₂-CH₂-CH₂-SiMe₂-(O-SiMe₂)ₓ-CH₂-CH₂-CH₂-OH,
wobei x eine ganze Zahl von 1 bis 50 und Me ein Methylrest ist.

Bevorzugte Beispiele für Dihydroxyverbindungen (2) sind 1,4-Cyclohexandiol Ethylenglycol, Propylenglycol, Triethylenglycol und Polyethylenglycol.

Der bei der Umsetzung gebildete Chlorwasserstoff kann entweder direkt aus dem Reaktionsgemisch durch Destillation oder Extraktion entfernt werden, oder es werden Chlorwasserstoff aufnehmende Basen oder die Dihydroxyverbindungen in Form ihrer Salze eingesetzt. Bevorzugt sind hierbei Stickstoffbasen.

Beispiele für Basen sind Pyridin, Ammoniak, Harnstoff, Diethylharnstoff, Ethylendiamin, Methylamin, Ethylamin, Triethylamin, Diethylamin, Tributylamin, Piperidin, Pyrimidin, Pyridazin, Imidazol und Diethylentriamin.

Bevorzugte Beispiele für Basen (3) sind Pyridin, Ammoniak, Harnstoff, Ethylendiamin, Triethylamin und Tributylamin.

Das erfindungsgemäße Verfahren kann in Gegenwart eines oder mehrerer Lösungsmittel durchgeführt werden. Beispiele für Lösungsmittel sind Kohlenwasserstoffe wie Toluol oder Isohexan, Ether wie Methyl-tert-butylether oder Siloxane wie Hexamethyldisiloxan, Octamethyltrisiloxan oder (Me₃SiO)₄Si (mit Me=Methylrest). Das Lösungsmittel wird bevorzugt in Gewichtsanteilen von mindestens 1 % bis höchstens der 100-fachen Gewichtsmenge, besonders bevorzugt von mindestens 10 % bis höchstens der 10-fachen Gewichtsmenge, jeweils bezogen auf das Gesamtgewicht der Komponenten (1) und (2) eingesetzt.

Das Verfahren kann als Batch-Verfahren, Semi-Batch-Verfahren oder als kontinuierliches Verfahren durchgeführt werden. Bei einem Semi-Batch-Verfahren wird bevorzugt die Komponente (2) vorgelegt, gegebenenfalls zusammen mit der Base, und die Komponente (1) zugegeben.

In einer weiteren Ausführungsform kann die Herstellung der polymeren Alkylsilikate der allgemeinen Formel (I), wobei Z ein Rest der Formel -CR^{c}₃ ist, erfolgen, indem
Tetrachlorsilane
mit Monohydroxyverbindungen (4) der Formel

   HO-CR^{c}₃,
und mit Dihydroxyverbindungen (2) der Formel

   HO-R^{a}-OH
oder deren Salze
gleichzeitig in einem Schritt oder nacheinander in zwei Schritten umgesetzt werden,
wobei Monohydroxyverbindungen (4) in Mengen von 1,5 bis 3,0 Mol, vorzugsweise 1,8 bis 2,2 Mol, je Mol Tetrachlorsilan und Dihydroxyverbindungen (2) in Mengen von 1,5 bis 3,0 Mol, vorzugsweise 1,8 bis 2,2 Mol, je Mol Tetrachlorsilan eingesetzt werden, und R^{a} und R^{c} die oben dafür angegebene Bedeutung haben. Beispielsweise kann hierfür 1 Mol Tetrachlorsilan mit 2 Mol HO-CR^{c}₃ und mit 2 Mol der Dihydroxyverbindung (2) umgesetzt werden. Bevorzugt erfolgt zuerst die Zugabe von HO-CR^{c}₃ und anschließend die Zugabe von Dihydroxyverbindung (2).

Das erfindungsgemäße Verfahren wird bei einer Temperatur von vorzugsweise - 20 bis + 250°C, bevorzugt + 20 bis + 150°C, durchgeführt. Es kann beim Druck der umgebenden Atmosphäre (ca. 1020hPa) oder bei höheren oder niedrigeren Drücken durchgeführt werden. Bevorzugt wird es bei dem Druck der umgebenden Atmosphäre durchgeführt.

Die erfindungsgemäßen polymeren Alkylsilikate weisen vorzugsweise ein Molgewicht Mₙ (Zahlenmittel) von 5 000 bis 50 000 auf und M_{w} (Gewichtsmittel) von 10 000 bis 100 000 auf.

Das Molgewicht wird bestimmt durch Gelpermeationschromatographie (Ausschlusschromatographie) unter Verwendung einer Agilent MesoPore und OligoPore Säule, Länge 300 mm, Innendurchmesser 7.5 mm, Partikelgröße 3 bzw. 6 mm bei 35°C, Elutionsmittel Toluol, Flussrate 0,3 ml / min., RI-Detektor und Polydimethylsiloxan Kalibrierung.

Die erfindungsgemäßen Alkylsilikate der Formel (I) haben den Vorteil gegenüber dem Stand der Technik, dass sie polymer und damit nicht flüchtig sind und daher in Materialien nicht migrieren. Sie sind außerdem trotz ihres hohen Molekulargewichts flüssig und haben sehr niedrige Glastemperaturen und sind dadurch geeignet, Silicone zu ersetzen. Ein weiterer Vorteil der erfindungsgemäßen Alkylsilikate der Formel (I) ist, dass sie modular aufgebaut sind und ihr Molekulargewicht dadurch prinzipiell beliebig verändert werden kann. Weiterhin tragen die Kettenenden der erfindungsgemäßen Alkylsilikate reaktionsfähige Gruppen, beispielsweise Chlor- oder Hydroxygruppen, an welchen die Anbindung einer Vielzahl weiterer ggf. funktionalisierter Gruppierungen möglich ist. Hierdurch bietet sich die Möglichkeit, das Anwendungsspektrum der erfindungsgemäßen Alkylsilikate zu erweitern.

Die erfindungsgemäßen polymeren Alkylsilikate können weiterverarbeitet werden, beispielsweise unter Vernetzung zu Elastomeren und dort eingesetzt werden, wo Silicone eingesetzt werden, beispielsweise in den Bereichen Hydrophobierung, Anti-Schaum, Textil, Kosmetik, Bautenschutz und Household-Care.

### Beispiele

Die in den Beispielen eingesetzte Verbindung [(2-BuO)₃SiO]₂SiCl₂ wird aus (2-BuO)₃SiOH und SiCl₄ hergestellt, wie beispielsweise beschrieben in Abe, Bull. Soc. Chim. Jpn. 1969, 42, 111-1123.

Die in den Beispielen eingesetzte Verbindung [CH₃-CH₂-C(CH₃)₂O]₂SiCl₂ wird aus CH₃-CH₂-C(CH₃)₂OH und SiCl₄ hergestellt, wie beispielsweise beschrieben in Docherty et al., Helv. Chim. Acta 2018, 101, e1700298.

### Beispiel 1:

Polymer der Formel (I) mit R^{a} = 1,4-Cyclohexyliden, Z = Si(OR^{b})₃ mit R^{b} = 2-Butyl, X = Cl, O-C₆H₁₀-OH und m = 14.

Zu einer Mischung aus 284 mg (2,44 mmol) 1,4-Cyclohexandiol und 430 mg (5,43 mmol) Pyridin in 1 ml Toluol werden langsam 1,54 g [(2-BuO)₃SiO]₂SiCl₂ (2,44 mmol) in 0,5 ml Toluol zugetropft. Es entsteht ein weißer Niederschlag von Pyridiniumhydrochlorid. Man erwärmt dann 4 Stunden auf 100°C. Die Lösung enthält das polymere Produkt mit Mₙ = 10000 Da / M_{w} = 21000. Hieraus ergibt sich m = 14. Man filtriert den gebildeten Niederschlag von Pyridiniumhydrochlorid ab und dampft das Toluol im Vakuum ab. Man erhält ein farbloses Öl mit einer dynamischen Viskosität η = 1.13 Pa·s bei 25°C. Glastemperatur T_{g} = -107.6 °C.

²⁹Si-NMR (CD₂Cl₂): δ = -92,5 und -98,6 ppm im Verhältnis 2 : 1.

### Beispiel 2:

Polymer der Formel (I) mit R^{a} = -CH₂-CH₂-(O-CH₂-CH₂)₂-, Z = Si(OR^{b})₃ mit R^{b} = 2-Butyl, X = -CH₂-CH₂-(O-CH₂-CH₂)₂-OH und m = 13.

3,07 g [(2-BuO)₃SiO]₂SiCl₂ (93 proz., 4,56 mmol) werden mit 1 ml Toluol versetzt. Zu der Lösung wird eine Mischung aus 737 mg (4,91 mmol) Triethylenglycol, 856 mg (10,8 mmol) Pyridin und 0,5 ml Toluol langsam hinzu getropft. Es entsteht sofort ein weißer Niederschlag von Pyridiniumhydrochlorid. Man erwärmt dann 4 Stunden auf 100°C. Die Lösung enthält das polymere Produkt mit Mₙ = 9700 Da / M_{w} = 22000.

Hieraus ergibt sich m = 13.

²⁹Si-NMR (CD₂Cl₂): δ = -92,3 und -96,8 ppm im Verhältnis 2 : 1.

### Beispiel 3:

Polymer der Formel (I) mit R^{a} = -CH₂-CH₂-(O-CH₂-CH₂)₂-, Z = Si(OR^{b})₃ mit R^{b} = 2-Butyl, X = -CH₂-CH₂-(O-CH₂-CH₂)₂-OH und m = 13.

Die Arbeitsweise von Beispiel 2 wird bei Raumtemperatur wiederholt. Nach 3 Stunden hat sich ein Polymer mit Mₙ = 12000 Da / M_{w} = 24000 Da gebildet.

Hieraus ergibt sich m = 13.

### Beispiel 4:

Polymer der Formel (I) mit R^{a} = -CH₂-CH₂-(O-CH₂-CH₂)₂-, Z = -C(CH₃)₂-CH₂-CH₃ und X = CH₂-CH₂-(O-CH₂-CH₂)₂-OH, Cl

Die Arbeitsweise von Beispiel 2 wird wiederholt mit der Abänderung, dass anstelle von [(2-BuO)₃SiO]₂SiCl₂ die Verbindung der Formel [CH₃-CH₂-C(CH₃)₂O]₂SiCl₂ eingesetzt wird, das molare Verhältnis von [CH₃-CH₂-C(CH₃)₂O]₂SiCl₂ : Triethylenglycol = 1.0 beträgt und die Umsetzung bei 80°C erfolgt. Nach 4 Stunden bei 80°C hat sich ein Polymer mit Mₙ = 15500 Da / M_{w} = 38300 Da gebildet, nach weiteren 5 Stunden bei 80°C wird wie in Beispiel 1 beschrieben aufgearbeitet. Man erhält 6,2 g des polymeren Produkts als farbloses Öl. Mₙ = 16900 Da / M_{w} = 42400 Da. Hieraus ergibt sich m = 48. ²⁹Si-NMR (CD₂Cl₂): δ = -89,72 ppm.

## Patentansprüche

1. Polymere Alkylsilikate der Formel (I) 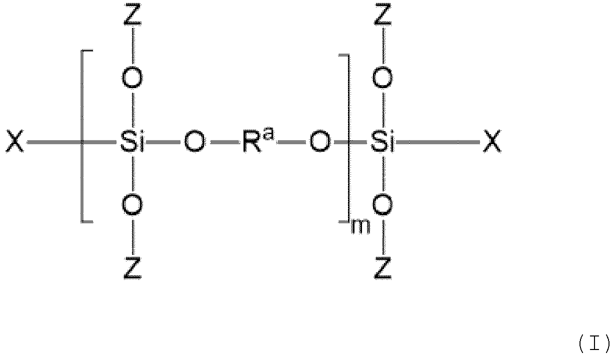 wobei
Z einen Rest der Formel -Si(OR^{b})₃ oder einen Rest der Formel -CR^{c}₃ bedeutet,
R^{a} unabhängig voneinander einen zweiwertigen Kohlenwasserstoffrest mit 3 bis 200 Kohlenstoffatomen, bevorzugt mit 3 bis 50 Kohlenstoffatomen, wobei die Kohlenstoffatome durch Sauerstoffatome oder durch Siloxanylreste der Formel -(R^{y}₂SiO)ₒ-SiR^{y}₂- ersetzt sein können, bedeutet, wobei
R^{y} unabhängig voneinander einen C₁- bis C₂₀-Kohlenwasserstoffrest, bevorzugt einen C₁- bis C₆-Kohlenwasserstoffrest, bedeutet und
o eine ganze Zahl von 0 bis 100, bevorzugt eine ganze Zahl von 0 bis 20, ist,
R^{b} unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
R^{c} unabhängig voneinander einen einwertigen unsubstituierten oder substituierten Kohlenwasserstoffrest mit 1 bis 50 C-Atomen bedeutet,
X ein Halogenatom, einen über Sauerstoff gebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiR^{x}₃ bedeutet,
R^{x} unabhängig voneinander einen einwertigen unsubstituierten oder substituierten C₁- bis C₄₀-Kohlenwasserstoffrest bedeutet und
m eine ganze Zahl von mindestens 2 und höchstens 1000 bedeutet.

2. Polymere Alkylsilikate nach Anspruch 1, **dadurch gekennzeichnet, dass** m eine ganze Zahl von mindestens 5 und höchstens 100 bedeutet.

3. Polymere Alkylsilikate nach Anspruch 1 oder 2, **dadurch gekennzeichnet, dass** der Rest R^{a} ausgewählt ist aus Resten der Gruppe bestehend aus 1,3-Propylenrest, 1,4-Butylenrest, 1,2-Cyclohexylidenrest, 1,3-Cyclohexylidenrest, 1,4-Cyclohexylidenrest, 1,2-Phenylenrest, 1,3-Phenylenrest, 1,4-Phenylenrest und Resten der Formeln -CHR³-CHR³-(OCHR³-CHR³)ₚ-, -(Me₂SiO)ₒ-Me₂Si-, -CH₂-CH₂-CH₂-(Me₂SiO)ₒ-Me₂Si-CH₂-CH₂-CH₂- und -CH₂-(Me₂SiO)ₒ-Me₂Si-CH₂-,
wobei
Me ein Methylrest ist,
R³ ein Wasserstoffatom oder einen C₁- bis C₁₈-Kohlenwasserstoffrest, bevorzugt ein Wasserstoffatom oder einen Methylrest, bedeutet,
o die in Anspruch 1 dafür angegebene Bedeutung hat und
p eine ganze Zahl von 0 bis 100, bevorzugt 0 bis 20, ist.

4. Polymere Alkylsilikate nach einem der Ansprüche 1 bis 3, **dadurch gekennzeichnet, dass** der Rest **R^{b}** ausgewählt ist aus der Gruppe bestehend aus 2-Butylrest, 3-Methyl-2-butylrest, 3-Methyl-2-pentylrest, 3-Pentylrest, 2-Hexylrest, 3-Hexylrest, 2-Heptylrest, 2-Octylrest, 1-Phenylethylrest, 1-Phenyl-1-propylrest, 2,2-Dimethyl-1-propylrest, 1,1-Dimethylethylrest und 1,1-Dimethylpropylrest.

5. Polymere Alkylsilikate nach einem der Ansprüche 1 bis 4, **dadurch gekennzeichnet, dass** R^{c} unabhängig voneinander einen linearen oder verzweigten acyclischen Kohlenwasserstoffrest mit 1 bis 10 Kohlenstoffatomen bedeutet.

6. Polymere Alkylsilikate nach einem der Ansprüche 1 bis 5, **dadurch gekennzeichnet, dass** Z ein Rest der Formel (2-BuO)₃SiO- oder CH₃-CH₂-C(CH₃)₂O- ist.

7. Verfahren zur Herstellung der polymeren Alkylsilikate nach einem der Ansprüche 1 bis 6, **dadurch gekennzeichnet, dass** Chlorsilane (1) der Formel
[(R^{b}O)₃SiO]₂SiCl₂
oder
(R^{c}₃CO)₂SiCl₂
mit Dihydroxyverbindungen (2) der Formel
HO-R^{a}-OH
oder deren Salze
umgesetzt werden,
wobei Dihydroxyverbindungen (2) in Mengen von 0,1 bis 10 Mol, vorzugsweise 0,5 bis 1,5 Mol, Dihydroxyverbindung (2) je Mol Chlorsilan (1) eingesetzt werden,
und R^{a}, R^{b} und R^{c} die in Anspruch 1 dafür angegebene Bedeutung haben.

8. Verfahren zur Herstellung der polymeren Alkylsilikate nach Anspruch 7, **dadurch gekennzeichnet, dass**
als Chlorsilane (1) solche der Formel
[(2-BuO)₃SiO]₂SiCl₂
oder
[CH₃-CH₂-C(CH₃)₂O]₂SiCl₂ ,
wobei 2-Bu ein 2-Butylrest ist,
eingesetzt werden.

9. Verfahren nach Anspruch 7 oder 8, **dadurch gekennzeichnet, dass** als Dihydroxyverbindungen (2) 1,4-Cyclohexandiol Ethylenglycol, Propylenglycol, Triethylenglycol oder Polyethylenglycol eingesetzt werden.

10. Verfahren nach Anspruch 7, 8 oder 9, **dadurch gekennzeichnet, dass** die Umsetzung in Gegenwart von Basen (3), vorzugsweise Stickstoffbasen, erfolgt.

11. Verfahren nach Anspruch 10, **dadurch gekennzeichnet, dass** als Basen (3) Pyridin, Ammoniak, Harnstoff, Ethylendiamin, Triethylamin oder Tributylamin eingesetzt werden.

12. Verfahren zur Herstellung der polymeren Alkylsilikate der Formel (I) nach einem der Ansprüche 1 bis 3, mit der Maßgabe, dass Z ein Rest der Formel -CR^{c}₃ ist,
**dadurch gekennzeichnet, dass**
Tetrachlorsilane
mit Monohydroxyverbindungen (4) der Formel
HO-CR^{c}₃,
und mit Dihydroxyverbindungen (2) der Formel
HO-R^{a}-OH
oder deren Salze
gleichzeitig in einem Schritt oder nacheinander in zwei Schritten umgesetzt werden,
wobei Monohydroxyverbindungen (4) in Mengen von 1,5 bis 3,0 Mol, vorzugsweise 1,8 bis 2,2 Mol, je Mol Tetrachlorsilan und Dihydroxyverbindungen (2) in Mengen von 1,5 bis 3,0 Mol, vorzugsweise 1,8 bis 2,2 Mol, je Mol Tetrachlorsilan eingesetzt werden,
und R^{a} und R^{c} die in Anspruch 1 dafür angegebene Bedeutung haben.

13. Verfahren nach Anspruch 12, **dadurch gekennzeichnet, dass** R^{c} unabhängig voneinander einen linearen oder verzweigten acyclischen Kohlenwasserstoffrest mit 1 bis 10 Kohlenstoffatomen bedeutet.

14. Verfahren nach Anspruch 12 oder 13, **dadurch gekennzeichnet, dass** die Umsetzung in Gegenwart von Basen (3), vorzugsweise Stickstoffbasen, bevorzugt Basen ausgewählt aus der Gruppe von Pyridin, Ammoniak, Harnstoff, Ethylendiamin, Triethylamin oder Tributylamin, erfolgt.

## Claims

1. Polymeric alkyl silicates of formula (I) 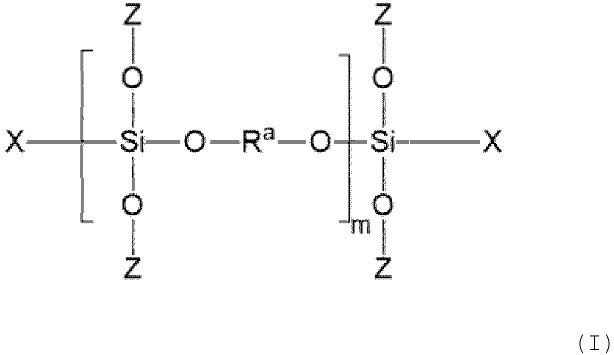 wherein
Z represents a radical of formula -Si (OR^{b})₃ or a radical of formula -CR^{c}₃,
R^{a} independently at each occurrence represents a divalent hydrocarbon radical having 3 to 200 carbon atoms, preferably having 3 to 50 carbon atoms, wherein the carbon atoms may be replaced by oxygen atoms or by siloxanyl radicals of formula - (R^{y}₂SiO)ₒ-SiR^{y}₂-, wherein
R^{y} independently at each occurrence represents a C₁- to C₂₀-hydrocarbon radical, preferably a C₁- to C₆-hydrocarbon radical, and
o is an integer from 0 to 100, preferably an integer from 0 to 20,
R^{b} independently at each occurrence represents a monovalent unsubstituted or substituted hydrocarbon radical having 4 to 40 carbon atoms which is branched at the α-carbon atom or is doubly branched at the β-carbon atom,
R^{c} independently at each occurrence represents a monovalent unsubstituted or substituted hydrocarbon radical having 1 to 50 carbon atoms,
X represents a halogen atom, an oxygen-bonded unsubstituted or substituted C₁- to C₄₀-hydrocarbon radical, wherein individual carbon atoms may be replaced by oxygen atoms, a radical of formula-O-Si(OR^{b})₃ or a radical of formula -OSiR^{x}₃,
R^{x} independently at each occurrence represents a monovalent unsubstituted or substituted C₁- to C₄₀-hydrocarbon radical and
m represents an integer of at least 2 and at most 1000.

2. Polymeric alkyl silicates according to Claim 1, **characterized in that** m is an integer of at least 5 and at most 100.

3. Polymeric alkyl silicates according to Claim 1 or 2, **characterized in that** the radical R^{a} is selected from radicals of the group consisting of 1,3-propylene radical, 1,4-butylene radical, 1,2-cyclohexylidene radical, 1,3-cyclohexylidene radical, 1,4-cyclohexylidene radical, 1,2-phenylene radical, 1,3-phenylene radical, 1,4-phenylene radical and radicals of formulae
-CHR³-CHR³-(OCHR³-CHR³)ₚ-,
-(Me₂SiO)ₒ-Me₂Si-,
-CH₂-CH₂-CH₂-(Me₂SiO)ₒ-Me₂Si-CH₂-CH₂-CH₂- and
-CH₂-(Me₂SiO)ₒ-Me₂Si-CH₂-,
wherein
Me is a methyl radical,
R³ represents a hydrogen atom or a C₁- to C₁₈-hydrocarbon radical, preferably a hydrogen atom or a methyl radical,
o is as defined in Claim 1 and
p is an integer from 0 to 100, preferably 0 to 20.

4. Polymeric alkyl silicates according to any of Claims 1 to 3, **characterized in that** the radical **R^{b}** is selected from the group consisting of 2-butyl radical, 3-methyl-2-butyl radical, 3-methyl-2-pentyl radical, 3-pentyl radical, 2-hexyl radical, 3-hexyl radical, 2-heptyl radical, 2-octyl radical, 1-phenylethyl radical, 1-phenyl-1-propyl radical, 2,2-dimethyl-1-propyl radical, 1,1-dimethylethyl radical and 1,1-dimethylpropyl radical.

5. Polymeric alkyl silicates according to any of Claims 1 to 4, **characterized in that** R^{c} independently at each occurrence represents a linear or branched acyclic hydrocarbon radical having 1 to 10 carbon atoms.

6. Polymeric alkyl silicates according to any of Claims 1 to 5, **characterized in that** Z is a radical of formula (2-BuO)₃SiO- or CH₃-CH₂-C(CH₃)₂O-.

7. Process for preparing the polymeric alkyl silicates according to any of Claims 1 to 6, **characterized in that**
chlorosilanes (1) of formula
[(R^{b}O)₃SiO]₂SiCl₂
or
(R^{c}₃CO)₂SiCl₂
are reacted with dihydroxy compounds (2) of formula
HO-R^{a}-OH
or their salts,
wherein dihydroxy compounds (2) are employed in amounts of 0.1 to 10 mol, preferably 0.5 to 1.5 mol, of dihydroxy compound (2) per mol of chlorosilane (1),
and R^{a}, R^{b} and R^{c} are as defined in Claim 1.

8. Process for preparing the polymeric alkyl silicates according to Claim 7, **characterized in that**
the chlorosilanes (1) employed are those of formula
[(2-BuO)₃SiO]₂SiCl₂
or
[CH₃-CH₂-C(CH₃)₂O]₂SiCl₂,
wherein 2-Bu is a 2-butyl radical.

9. Process according to Claim 7 or 8, **characterized in that** the dihydroxy compounds (2) employed are 1,4-cyclohexanediol, ethylene glycol, propylene glycol, triethylene glycol or polyethylene glycol.

10. Process according to Claim 7, 8 or 9, **characterized in that** the reaction is carried out in the presence of bases (3), preferably nitrogen bases.

11. Process according to Claim 10, **characterized in that** the bases (3) employed are pyridine, ammonia, urea, ethylenediamine, triethylamine or tributylamine.

12. Process for preparing the polymeric alkyl silicates of formula (I) according to any of Claims 1 to 3, with the proviso that Z is a radical of formula -CR^{c}₃,
**characterized in that**
tetrachlorsilanes are reacted with
with monohydroxy compounds (4) of formula
HO-CR^{c}₃,
and with dihydroxy compounds (2) of formula
HO-R^{a}-OH
or their salts,
simultaneously in one step or successively in two steps,
wherein monohydroxy compounds (4) are employed in amounts of 1.5 to 3.0 mol, preferably 1.8 to 2.2 mol, per mol of tetrachlorosilane and dihydroxy compounds (2) are employed in amounts of 1.5 to 3.0 mol, preferably 1.8 to 2.2 mol, per mol of tetrachlorosilane,
and R^{a} and R^{c} are as defined in Claim 1.

13. Process according to Claim 12, **characterized in that** R^{c} independently at each occurrence represents a linear or branched acyclic hydrocarbon radical having 1 to 10 carbon atoms.

14. Process according to Claim 12 or 13, **characterized in that** the reaction is carried out in the presence of bases (3), preferably nitrogen bases, preferably bases selected from the group of pyridine, ammonia, urea, ethylenediamine, triethylamine or tributylamine.

## Revendications

1. Silicates d'alkyle polymériques de formule (I) 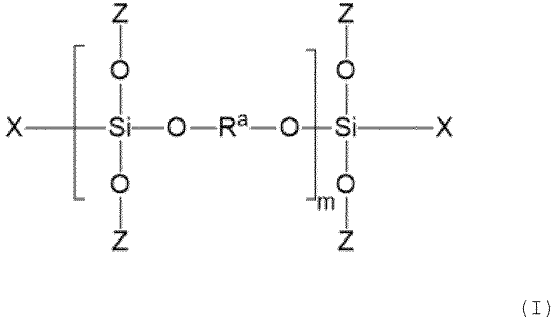 dans laquelle
Z désigne un radical de formule -Si(OR^{b})₃ ou un radical de formule -CR^{c}₃,
R^{a}, indépendamment les uns des autres, désigne un radical hydrocarboné divalent comportant 3 à 200 atomes de carbone, préférablement comportant 3 à 50 atomes de carbone, les atomes de carbone pouvant être substitués par des atomes d'oxygène ou par des radicaux siloxanyle de formule -(R^{y}₂SiO)ₒ-SiR^{y}₂-,
R^{y}, indépendamment les uns des autres, désigne un radical hydrocarboné en C₁-C₂₀, préférablement un radical hydrocarboné en Ci-Ce, et
o est un nombre entier de 0 à 100, préférablement un nombre entier de 0 à 20,
R^{b}, indépendamment les uns des autres, désigne un radical hydrocarboné monovalent substitué ou non substitué comportant 4 à 40 atomes de carbone, qui est ramifié au niveau de l'atome de carbone en α ou qui est ramifié deux fois au niveau de l'atome de carbone en β,
R^{c}, indépendamment les uns des autres, désigne un radical hydrocarboné monovalent substitué ou non substitué comportant 1 à 50 atomes de carbone,
X désigne un atome d'halogène, un radical hydrocarboné en C₁-C₄₀ substitué ou non substitué lié à l'oxygène, chaque atome de carbone pouvant être substitué par des atomes d'oxygène, un radical de formule -O-Si (OR^{b})₃ ou un radical de formule -OSiR^{x}₃,
R^{x}, indépendamment les uns des autres, désigne un radical hydrocarboné en C₁-C₄₀ monovalent substitué ou non substitué et
m désigne un nombre entier d'au moins 2 et d'au plus 1 000.

2. Silicates d'alkyle polymériques selon la revendication 1, **caractérisés en ce que** m désigne un nombre entier d'au moins 5 et d'au plus 100.

3. Silicates d'alkyle polymériques selon la revendication 1 ou 2, **caractérisés en ce que** le radical R^{a} est choisi parmi les radicaux du groupe constitué par le radical 1,3-propyle, le radical 1,4-butyle, le radical 1,2-cyclohexylidène, le radical 1,3-cyclohexylidène, le radical 1,4-cyclohexylidène, le radical 1,2-phénylène, le radical 1,3-phénylène, le radical 1,4-phénylène et des radicaux des formules
-CHR³-CHR³-(OCHR³-CHR³)ₚ-,
-(Me₂SiO)ₒ-Me₂Si-,
-CH₂-CH₂-CH₂-(Me₂SiO)ₒ-Me₂Si-CH₂-CH₂-CH₂- et
-CH₂-(Me₂SiO)ₒ-Me₂Si-CH₂-,
dans lesquelles
Me est un radical méthyle,
R³ désigne un atome d'hydrogène ou un radical hydrocarboné en C₁-C₁₈, préférablement un atome d'hydrogène ou un radical méthyle,
o est tel que défini dans la revendication 1 et
p est un nombre entier de 0 à 100, préférablement de 0 à 20.

4. Silicates d'alkyle polymériques selon l'une quelconque des revendications 1 à 3, **caractérisés en ce que** le radical R^{b} est choisi dans le groupe constitué par le radical 2-butyle, le radical 3-méthyl-2-butyle, le radical 3-méthyl-2-pentyle, le radical 3-pentyle, le radical 2-hexyle, le radical 3-hexyle, le radical 2-heptyle, le radical 2-octyle, le radical 1-phényléthyle, le radical 1-phényl-1-propyle, le radical 2,2-diméthyl-1-propyle, le radical 1,1-diméthyléthyle et le radical 1,1-diméthylpropyle.

5. Silicates d'alkyle polymériques selon l'une quelconque des revendications 1 à 4, **caractérisés en ce que** R^{c}, indépendamment les uns des autres, désigne un radical hydrocarboné acyclique linéaire ou ramifié comportant 1 à 10 atomes de carbone.

6. Silicates d'alkyle polymériques selon l'une quelconque des revendications 1 à 5, **caractérisés en ce que** Z est un radical de formule (2-BuO)₃SiO- ou CH₃-CH₂-C(CH₃)₂O-.

7. Procédé de préparation des silicates d'alkyle polymériques selon l'une quelconque des revendications 1 à 6, **caractérisé en ce qu'**on fait réagir des chlorosilanes (1) de formule
[(R^{b}O)₃SiO]₂SiCl₂
ou
(R^{c}₃CO)₂SiCl₂
avec des composés dihydroxylés (2) de formule
HO-R^{a}-OH
ou leurs sels,
les composés dihydroxylés (2) étant utilisés en des quantités de 0,1 à 10 mole, préférablement de 0,5 à 1,5 mole, de composé dihydroxylé (2) par mole de chlorosilane (1),
et R^{a}, R^{b} et R^{c} possédant la signification indiquée pour ceux-ci dans la revendication 1 .

8. Procédé de préparation des silicates d'alkyle polymériques selon la revendication 7, **caractérisé en ce que** ceux de formule
[(2-BuO)₃SiO]₂SiCl₂
ou
[CH₃-CH₂-C(CH₃)₂O]₂SiCl₂,
2-Bu étant un radical 2-butyle,
sont utilisés en tant que chlorosilanes (1).

9. Procédé selon la revendication 7 ou 8, **caractérisé en ce que** le 1,4-cyclohexanediol, l'éthylène glycol, le propylène glycol, le triéthylène glycol ou un polyéthylène glycol sont utilisés en tant que composés dihydroxylés (2).

10. Procédé selon la revendication 7, 8 ou 9, **caractérisé en ce que** la réaction se déroule en présence de bases (3), préférablement de bases azotées.

11. Procédé selon la revendication 10, **caractérisé en ce que** la pyridine, l'ammoniac, l'urée, l'éthylènediamine, la triéthylamine ou la tributylamine sont utilisées comme bases (3).

12. Procédé de préparation des silicates d'alkyle polymériques de formule (I) selon l'une quelconque des revendications 1 à 3, à condition que Z soit un radical de formule -CR^{c}₃, **caractérisé en ce qu'**on fait réagir des tétrachlorosilanes avec des composés monohydroxylés (4) de formule
HO-CR^{c}₃,
et avec des composés dihydroxylés (2) de formule
HO-R^{a}-OH
ou leurs sels,
simultanément en une étape ou successivement en deux étapes,
des composés monohydroxylés (4) en des quantités de 1,5 à 3,0 mol, préférablement de 1,8 à 2,2 mol, par mole de tétrachlorosilane et des composés dihydroxylés (2) en des quantités de 1,5 à 3,0 mol, préférablement de 1,8 à 2,2 mol, par mole de tétrachlorosilane étant utilisés,
et R^{a} et R^{c} possédant la signification indiquée pour ceux-ci dans la revendication 1.

13. Procédé selon la revendication 12, **caractérisé en ce que** R^{c}, indépendamment les uns des autres, désigne un radical hydrocarboné acyclique linéaire ou ramifié comportant 1 à 10 atomes de carbone.

14. Procédé selon la revendication 12 ou 13, **caractérisé en ce que** la réaction se déroule en présence de bases (3), préférablement de bases azotées, préférablement de bases choisies dans le groupe constitué par la pyridine, l'ammoniac, l'urée, l'éthylènediamine, la triéthylamine ou la tributylamine.
